# EUROPEAN PATENT APPLICATION

(11) **EP 2 919 146 A1**
(43) Date of publication of application: **16.09.2015**
(21) Application number: 14160064.3
(22) Date of filing: 14.03.2014
(51) Int. Cl.: G06F 21/52, G06F 21/55

(54) **An apparatus for enforcing control flows**

(71) Applicant: NXP B.V., 5656 AG Eindhoven (NL)
(72) Inventor: Rombouts, Peter Maria Franciscus, Redhill, Surrey RH1 1SH (GB)
(74) Representative: Miles, John Richard

(57) **Abstract**

An apparatus for enforcing control flows on at least one processor comprising: a checking unit configured to determine a difference between a observed control flow for a sequence of processes and an expected control flow for the sequence of processes; an intervention unit configured to generate an intervention for the at least one processor based on the checking unit determining a difference between the control flow for the sequence of processes and the expected control flow for the sequence of processes.

## Description

The present application relates to apparatus and methods for the enforcement of control flows on at least one processor. The application further relates to, but is not limited to, apparatus and methods for the enforcement of control flows on at least one processor within an embedded controller.

Computer systems are well known. A processor or processor core, for example within a microcontroller (MCU) implemented within an embedded processing platform, is configured to fetch and execute instructions which form a program designed usually to perform a desired function or process.

However it is further known that the inherent flexibility of a computer system may lead to the computer system being generally susceptible to 'infection' by computer viruses and malware where the instructions being fetched and executed perform an undesired or harmful function.

The issues caused by viruses and malware infecting a computer system or (embedded) processing platform are well known. They range from relatively innocent annoyances such as disabling a few functions or flooding the user with advertisements, to much more harmful attacks which are often set up by professionals for financial gain, intelligence gathering or sabotage; for example aiming to steal passwords, pin codes, credit card data, sensitive data, trade secrets, money. Furthermore some viruses and malware infections are designed to shut down whole industrial plants or facilities. Examples of such critically harmful infections are those known as stuxnet, duqu and flame.

There are also already a host of well-known protection mechanisms against these threats. Besides overall security measures included in most operating systems such as different privilege levels, access control and user authentication there are also more specific tools and techniques such as firewalls, virus scanners, honeypots, and network monitoring programs.

These techniques are generally known to have limitations. The security features included in operating systems may be overcome by attackers exploiting bugs in the software. Software providers may issue software patches as soon as possible when a new bug is discovered, but this leaves a window of opportunity for attackers. Firewalls may reduce the attack surface for an attacker to work on, but are unable to stop attacks originating from within the network they are protecting. Virus scanners and network monitoring equipment require frequent updates to their database of signatures to be effective and this may also leave a window of opportunity for the attacker. The functionality of the virus scanner is often complemented by heuristic methods, but the heuristic method approach is not able to capture all attacks. Honeypots may be designed to complement network monitors by luring the attacker towards them, which the network monitor may detect. However a honeypot approach typically only succeeds in a relatively low number of cases.

The invention is defined by the claims.

According to one aspect there is provided a method for enforcing control flows on at least one processor, the method comprising: determining a difference between an observed control flow for a sequence of processes and an expected control flow for the sequence of processes; generating an intervention for the at least one processor based on the difference between the observed control flow for the sequence of processes and the expected control flow for the sequence of processes.

Therefore according to some embodiments the enforcement of control flows may permit the detection of control flow corruption or intrusion.

Determining the difference between the observed control flow for the sequence of processes and the expected control flow for the sequence of processes may comprise determining a difference between at least one observed instruction fetch and at least one expected instruction fetch.

Thus according to some embodiments any unexpected program instruction fetch changes are determined and thus intrusion or exploitation of a trusted program may be determined.

Determining the difference between the at least one observed instruction fetch and at least one expected instruction fetch may comprise: comparing the at least one observed instruction fetch and at least one expected instruction fetch; determining a difference based on the comparing of the at least one observed instruction fetch and the at least one expected instruction fetch.

Determining the difference between the at least one observed instruction fetch and at least one expected instruction fetch may comprise: determining for the at least one observed instruction fetch an associated expectation value; determining whether the associated expectation value is less than an expectation threshold value.

Generating the intervention based on the difference between the observed control flow for the sequence of processes and the expected control flow for the sequence of processes may comprise generating an intervention based on the difference between the at least one observed instruction fetch and the at least one expected instruction fetch.

Generating the intervention based on the difference between the observed control flow for the sequence of processes and the expected control flow for the sequence of processes may comprise generating an intervention based on the associated expectation value is less than an expectation threshold value.

The method may further comprise determining the expected control flow for the sequence of processes.

Determining the expected control flow for the sequence of processes may further comprise: generating a control flow associated with at least one process from the sequence of processes; encoding the control flow associated with at least one process from the sequence of processes.

Determining the expected control flow for the sequence of processes may further comprise storing an encoded control flow associated with at least one process from the sequence of processes.

Determining the expected control flow for the sequence of processes may further comprise receiving an encoded control flow associated with at least one process from the sequence of processes.

Determining the expected control flow for the sequence of processes may further comprise receiving a determined control flow associated with at least one process from the sequence of processes.

Determining the expected control flow for the sequence of processes may comprise determining at least one expected instruction fetch.

Determining the expected control flow for the sequence of processes may comprise determining at least one expected instruction fetch and an associated expectation value.

Determining the at least one expected instruction fetch may comprise receiving at least one expected instruction fetch.

Determining the expected control flow for the sequence of processes may comprise receiving at least one expected instruction fetch and an associated expectation value.

Determining the at least one expected instruction fetch may comprise generating the at least one expected instruction fetch by dynamically analysing at least one previous instruction fetch.

The at least one observed instruction fetch may comprise at least one instruction fetch memory address.

The at least one observed instruction fetch may comprise at least one instruction fetch instruction word.

The at least one observed instruction fetch may comprise at least one instruction fetch byte code.

The at least one expected instruction fetch may comprise at least one instruction fetch memory address associated with at least one preceding instruction fetch memory address.

The at least one expected instruction fetch may comprise at least one instruction fetch instruction word associated with at least one preceding instruction fetch instruction word.

The at least one expected instruction fetch may comprise at least one instruction fetch byte code associated with at least one preceding instruction fetch byte code.

Generating an intervention for the at least one processor based on the difference between the control flow for the sequence of processes and the expected control flow for the sequence of processes may comprise generating a hardware error associated with the at least one processor.

Generating an intervention for the at least one processor based on the difference between the control flow for the sequence of processes and the expected control flow for the sequence of processes may comprise generating an invalid address error associated with the at least one processor.

Generating an intervention for the at least one processor based on the difference between the control flow for the sequence of processes and the expected control flow for the sequence of processes may comprise halting the operation of the at least one processor.

Generating an intervention for the at least one processor based on the difference between the control flow for the sequence of processes and the expected control flow for the sequence of processes may comprise resetting the at least one processor.

Generating an intervention for the at least one processor based on the difference between the control flow for the sequence of processes and the expected control flow for the sequence of processes may comprise initiating a code verification operation associated with the at least one processor.

Generating an intervention for the at least one processor based on the difference between the control flow for the sequence of processes and the expected control flow for the sequence of processes may comprise raising an exception associated with the at least one processor.

Generating an intervention for the at least one processor based on the difference between the control flow for the sequence of processes and the expected control flow for the sequence of processes may comprise raising an interrupt associated with the at least one processor.

A non-transitory computer-readable medium containing a computer program may comprise computer program code means adapted to control a physical computing device to perform all the steps of the methods detailed herein if the program is run on the physical computing device.

According to a second aspect there is provided an apparatus for enforcing control flows on at least one processor, the apparatus comprising: a checking unit configured to determine a difference between an observed control flow for a sequence of processes and an expected control flow for the sequence of processes; an intervention unit configured to generate an intervention for the at least one processor based on the checking unit determining a difference between the observed control flow for the sequence of processes and the expected control flow for the sequence of processes.

The checking unit may be configured to determine a difference between at least one observed instruction fetch and at least one expected instruction fetch.

The checking unit configured to determine the difference between the at least one observed instruction fetch and at least one expected instruction fetch may be further configured to: compare the at least one observed instruction fetch and at least one expected instruction fetch; determine a difference based on the comparison of the at least one observed instruction fetch and the at least one expected instruction fetch.

The checking unit configured to determine the difference between the at least one observed instruction fetch and at least one expected instruction fetch may be further configured to: determine for the at least one observed instruction fetch an associated expectation value; determine whether the associated expectation value is less than an expectation threshold value.

The intervention unit may be configured to generate an intervention based on the checking unit determining a difference between the at least one observed instruction fetch and the at least one expected instruction fetch.

The intervention unit may be configured to generate an intervention based on the checking unit determining the associated expectation value is less than an expectation threshold value.

The apparatus may further comprise a reference provider configured to determine the expected control flow for the sequence of processes.

The reference provider may be configured to generate a control flow associated with at least one process from the sequence of processes; encode the control flow associated with at least one process from the sequence of processes.

The reference provider may be configured to store an encoded control flow associated with at least one process from the sequence of processes.

The reference provider may be configured to receive an encoded control flow associated with at least one process from the sequence of processes.

The reference provider may be configured to receive a determined control flow associated with at least one process from the sequence of processes.

The reference provider may be configured to determine at least one expected instruction fetch.

The reference provider configured to determine the expected control flow for the sequence of processes may be configured to determine at least one expected instruction fetch and an associated expectation value.

The reference provider configured to determine the at least one expected instruction fetch may be configured to receive at least one expected instruction fetch.

The reference provider configured to determine the expected control flow for the sequence of processes may be configured to receive at least one expected instruction fetch and an associated expectation value.

The reference provider configured to determine the at least one expected instruction fetch may be configured to generate the at least one expected instruction fetch by dynamically analysing at least one previous instruction fetch.

The at least one observed instruction fetch may comprise at least one instruction fetch memory address.

The at least one observed instruction fetch may comprise at least one instruction fetch instruction word.

The at least one observed instruction fetch may comprise at least one instruction fetch byte code.

The at least one expected instruction fetch may comprise at least one instruction fetch memory address associated with at least one preceding instruction fetch memory address.

The at least one expected instruction fetch may comprise at least one instruction fetch instruction word associated with at least one preceding instruction fetch instruction word.

The at least one expected instruction fetch may comprise at least one instruction fetch byte code associated with at least one preceding instruction fetch byte code.

The intervention unit configured to generate an intervention for the at least one processor based on the difference between the control flow for the sequence of processes and the expected control flow for the sequence of processes may be configured to generate a hardware error associated with the at least one processor.

The intervention unit configured to generate an intervention for the at least one processor based on the difference between the control flow for the sequence of processes and the expected control flow for the sequence of processes may be configured to generate an invalid address error associated with the at least one processor.

The intervention unit configured to generate an intervention for the at least one processor based on the difference between the control flow for the sequence of processes and the expected control flow for the sequence of processes may be configured to halt the operation of the at least one processor.

The intervention unit configured to generate an intervention for the at least one processor based on the difference between the control flow for the sequence of processes and the expected control flow for the sequence of processes may be configured to reset the at least one processor.

The intervention unit configured to generate an intervention for the at least one processor based on the difference between the control flow for the sequence of processes and the expected control flow for the sequence of processes may be configured to initiate a code verification operation associated with the at least one processor.

The intervention unit configured to generate an intervention for the at least one processor based on the difference between the control flow for the sequence of processes and the expected control flow for the sequence of processes may be configured to raise an exception associated with the at least one processor.

The intervention unit configured to generate an intervention for the at least one processor based on the difference between the control flow for the sequence of processes and the expected control flow for the sequence of processes may be configured to raise an interrupt associated with the at least one processor.

According to a third aspect there is provided an apparatus for enforcing control flows on at least one processor, the apparatus comprising: means for determining a difference between an observed control flow for a sequence of processes and an expected control flow for the sequence of processes; means for generating an intervention for the at least one processor based on the difference between the observed control flow for the sequence of processes and the expected control flow for the sequence of processes.

The means for determining the difference between the observed control flow for the sequence of processes and the expected control flow for the sequence of processes may comprise means for determining a difference between at least one observed instruction fetch and at least one expected instruction fetch.

The means for determining the difference between the at least one observed instruction fetch and at least one expected instruction fetch may comprise: means for comparing the at least one observed instruction fetch and at least one expected instruction fetch; means for determining a difference based on the comparing of the at least one observed instruction fetch and the at least one expected instruction fetch.

The means for determining the difference between the at least one observed instruction fetch and at least one expected instruction fetch may comprise: means for determining for the at least one observed instruction fetch an associated expectation value; means for determining whether the associated expectation value is less than an expectation threshold value.

The means for generating the intervention based on the difference between the observed control flow for the sequence of processes and the expected control flow for the sequence of processes may comprise means for generating an intervention based on the difference between the at least one observed instruction fetch and the at least one expected instruction fetch.

The means for generating the intervention based on the difference between the observed control flow for the sequence of processes and the expected control flow for the sequence of processes may comprise means for generating an intervention based on the associated expectation value is less than an expectation threshold value.

The apparatus may further comprise means for determining the expected control flow for the sequence of processes.

The means for determining the expected control flow for the sequence of processes may further comprise: means for generating a control flow associated with at least one process from the sequence of processes; means for encoding the control flow associated with at least one process from the sequence of processes.

The means for determining the expected control flow for the sequence of processes may further comprise means for storing an encoded control flow associated with at least one process from the sequence of processes.

The means for determining the expected control flow for the sequence of processes may further comprise means for receiving an encoded control flow associated with at least one process from the sequence of processes.

The means for determining the expected control flow for the sequence of processes may further comprise means for receiving a determined control flow associated with at least one process from the sequence of processes.

The means for determining the expected control flow for the sequence of processes may comprise means for determining at least one expected instruction fetch.

The means for determining the expected control flow for the sequence of processes may comprise means for determining at least one expected instruction fetch and an associated expectation value.

The means for determining the at least one expected instruction fetch may comprise means for receiving at least one expected instruction fetch.

The means for determining the expected control flow for the sequence of processes may comprise means for receiving at least one expected instruction fetch and an associated expectation value.

The means for determining the at least one expected instruction fetch may comprise means for generating the at least one expected instruction fetch by dynamically analysing at least one previous instruction fetch.

The at least one observed instruction fetch may comprise at least one instruction fetch memory address.

The at least one observed instruction fetch may comprise at least one instruction fetch instruction word.

The at least one observed instruction fetch may comprise at least one instruction fetch byte code.

The at least one expected instruction fetch may comprise at least one instruction fetch memory address associated with at least one preceding instruction fetch memory address.

The at least one expected instruction fetch may comprise at least one instruction fetch instruction word associated with at least one preceding instruction fetch instruction word.

The at least one expected instruction fetch may comprise at least one instruction fetch byte code associated with at least one preceding instruction fetch byte code.

The means for generating an intervention for the at least one processor based on the difference between the control flow for the sequence of processes and the expected control flow for the sequence of processes may comprise means for generating a hardware error associated with the at least one processor.

The means for generating an intervention for the at least one processor based on the difference between the control flow for the sequence of processes and the expected control flow for the sequence of processes may comprise means for generating an invalid address error associated with the at least one processor. The means for generating an intervention for the at least one processor based on the difference between the control flow for the sequence of processes and the expected control flow for the sequence of processes may comprise means for halting the operation of the at least one processor.

The means for generating an intervention for the at least one processor based on the difference between the control flow for the sequence of processes and the expected control flow for the sequence of processes may comprise means for resetting the at least one processor.

The means for generating an intervention for the at least one processor based on the difference between the control flow for the sequence of processes and the expected control flow for the sequence of processes may comprise means for initiating a code verification operation associated with the at least one processor.

The means for generating an intervention for the at least one processor based on the difference between the control flow for the sequence of processes and the expected control flow for the sequence of processes may comprise means for raising an exception associated with the at least one processor.

The means for generating an intervention for the at least one processor based on the difference between the control flow for the sequence of processes and the expected control flow for the sequence of processes may comprise means for raising an interrupt associated with the at least one processor.

According to a fourth aspect there is provided an apparatus for enforcing control flows on at least one processor comprising the at least one processor and at least one memory including computer code for one or more programs, the at least one memory and the computer code configured to with the at least one processor cause the apparatus to: determine a difference between an observed control flow for a sequence of processes and an expected control flow for the sequence of processes; generate an intervention for the at least one processor based on the checking unit determining a difference between the observed control flow for the sequence of processes and the expected control flow for the sequence of processes.

Determining a difference between a observed control flow for the sequence of processes and an expected control flow for the sequence of processes may cause the apparatus to determine a difference between at least one observed instruction fetch and at least one expected instruction fetch.

Determining the difference between the at least one observed instruction fetch and at least one expected instruction fetch may cause the apparatus to: compare the at least one observed instruction fetch and at least one expected instruction fetch; determine a difference based on the comparison of the at least one observed instruction fetch and the at least one expected instruction fetch.

Determining the difference between the at least one observed instruction fetch and at least one expected instruction fetch may cause the apparatus to: determine for the at least one observed instruction fetch an associated expectation value; determine whether the associated expectation value is less than an expectation threshold value.

Generating an intervention for the at least one processor based on the checking unit determining a difference between the control flow for the sequence of processes and the expected control flow for the sequence of processes may cause the apparatus to generate an intervention based on the checking unit determining a difference between the at least one observed instruction fetch and the at least one expected instruction fetch.

Generating the intervention based on the difference between the observed control flow for the sequence of processes and the expected control flow for the sequence of processes may cause the apparatus to generate an intervention based on the associated expectation value is less than an expectation threshold value.
The apparatus may further be caused to determine the expected control flow for the sequence of processes.

Determining the expected control flow for the sequence of processes may cause the apparatus to: generate a control flow associated with at least one process from the sequence of processes; encode the control flow associated with at least one process from the sequence of processes.

Determining the expected control flow for the sequence of processes may further cause the apparatus to store an encoded control flow associated with at least one process from the sequence of processes.

Determining the expected control flow for the sequence of processes may further cause the apparatus to receive an encoded control flow associated with at least one process from the sequence of processes.

Determining the expected control flow for the sequence of processes may further cause the apparatus to receive a determined control flow associated with at least one process from the sequence of processes.

Determining the expected control flow for the sequence of processes may cause the apparatus to determine at least one expected instruction fetch.

Determining the expected control flow for the sequence of processes may cause the apparatus to determine at least one expected instruction fetch and an associated expectation value.

Determining the at least one expected instruction fetch may cause the apparatus to receive at least one expected instruction fetch.

Determining the expected control flow for the sequence of processes may cause the apparatus to receive at least one expected instruction fetch and an associated expectation value.

Determining the at least one expected instruction fetch may cause the apparatus to generate the at least one expected instruction fetch by dynamically analysing at least one previous instruction fetch.

The at least one observed instruction fetch may comprise at least one instruction fetch memory address.

The at least one observed instruction fetch may comprise at least one instruction fetch instruction word.

The at least one observed instruction fetch may comprise at least one instruction fetch byte code.

The at least one expected instruction fetch may comprise at least one instruction fetch memory address associated with at least one preceding instruction fetch memory address.

The at least one expected instruction fetch may comprise at least one instruction fetch instruction word associated with at least one preceding instruction fetch instruction word.

The at least one expected instruction fetch may comprise at least one instruction fetch byte code associated with at least one preceding instruction fetch byte code.

Generating an intervention for the at least one processor based on the difference between the control flow for the sequence of processes and the expected control flow for the sequence of processes may cause the apparatus to generate a hardware error associated with the at least one processor.

Generating an intervention for the at least one processor based on the difference between the control flow for the sequence of processes and the expected control flow for the sequence of processes may cause the apparatus to generate an invalid address error associated with the at least one processor.

Generating an intervention for the at least one processor based on the difference between the control flow for the sequence of processes and the expected control flow for the sequence of processes may cause the apparatus to halt the operation of the at least one processor.

Generating an intervention for the at least one processor based on the difference between the control flow for the sequence of processes and the expected control flow for the sequence of processes may cause the apparatus to reset the at least one processor.

Generating an intervention for the at least one processor based on the difference between the control flow for the sequence of processes and the expected control flow for the sequence of processes may cause the apparatus to initiate a code verification operation associated with the at least one processor.

Generating an intervention for the at least one processor based on the difference between the control flow for the sequence of processes and the expected control flow for the sequence of processes may cause the apparatus to raise an exception associated with the at least one processor.

Generating an intervention for the at least one processor based on the difference between the control flow for the sequence of processes and the expected control flow for the sequence of processes may cause the apparatus to raise an interrupt associated with the at least one processor.

Embodiments are described in more detail and by way of non-limiting examples with reference to the accompanying drawings, wherein
Figure 1 shows an example computer system comprising apparatus according to some embodiments;
Figure 2 shows an example detail of the apparatus according to some embodiments;
Figure 3 shows a flow diagram of an example operation of the apparatus as shown in Figure 1 and 2; and
Figure 4 shows a flow diagram of an example operation of the reference provider part of the apparatus as shown in Figure 2.

It should be understood that the Figures are merely schematic and are not drawn to scale. It should also be understood that the same reference numerals are used throughout the Figures to indicate the same or similar parts.

The concept as described with respect to the following embodiments is a method and apparatus configured to inspect, monitor or observe the control flow or program flow of software running on a processing unit, such as an embedded processing unit, compare the observed program flow to an expected program flow, and intervene when there is a deviation between the observed and expected program flows.

As described herein the apparatus performing the inspection, monitoring or observation may in some embodiments be implemented by an independent hardware block that inspects all instruction or program code fetches associated with a central processing unit (or units).

Although the following description features embodiments implementing the apparatus and methods operating on a single processor core running a limited and well defined set of programs, it would be appreciated that the apparatus and technique is applicable to all types of processors and cores. Similarly it would be understood that the following apparatus and methods are also applicable to sequencers, virtual machines, emulators, and finite state machine (FSM) implementations.

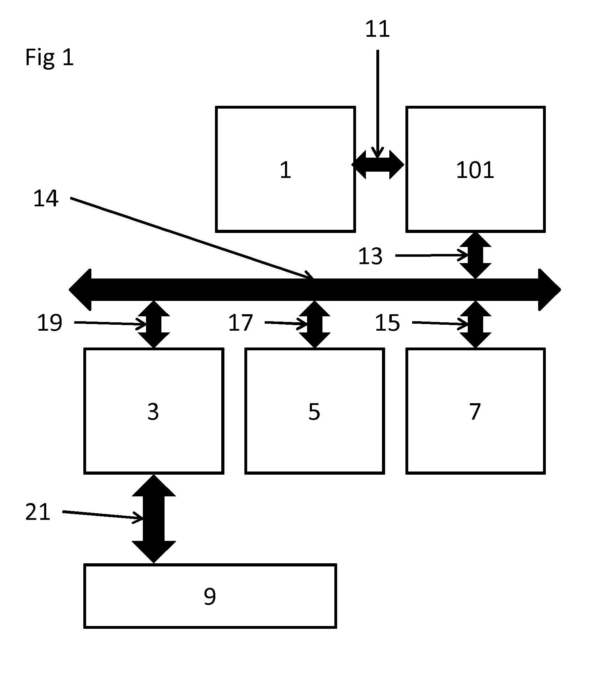

With respect to Figure 1 an example microcontroller (MCU) architecture is shown comprising apparatus configured to observe and intervene in the operation of a central processing unit when the apparatus determines that the control flow or program flow operation of the central processing unit deviates from a defined control flow of operation.

The example microcontroller (MCU) architecture comprises a central processing unit (CPU) 1, at least one memory, apparatus configured to permit communication with peripherals either integrated within the microcontroller or external to the microcontroller, and a communications bus or coupling to permit data to pass between the parts.

The CPU 1 may be any suitable processing unit configured to fetch and execute instructions and similarly fetch and process data. The CPU 1 is shown in some embodiments coupled to a communications bus 14 via a control flow enforcer (CFE) or program flow enforcer (PFE) 101. In the example shown in Figure 1 the CPU 1 and the CFE 101 are coupled or connected via a suitable coupling 11 and furthermore the CFE 101 is configured to be coupled or connected to the communication bus 14 via a further suitable coupling 13.

The communication bus 14, as described herein, may be any suitable coupling or connection permitting instructions and data to pass between the various parts of the microcontroller (MCU). As shown in Figure 1 the communications bus 14 is coupled to at least one memory part. For example the communications bus 14 may be coupled to a random access memory (RAM) 7 via a suitable coupling or connection 15, a flash memory 5 via a suitable coupling or connection 17.

It would be understood that although in the example shown herein the communications bus 14 comprises a single bus for accessing instructions and data, in some embodiments the system architecture employs a Harvard architecture where there are provided separate communications buses for instructions and data. Furthermore it would be understood that in some embodiments, where there are separate communications buses, these instruction and data communications busses may be the same or differ in width.

The apparatus shown in Figure 1 comprises more than one type of memory, a random access memory (RAM) 7 part which may be any suitable type of random access memory and a flash memory 5, which may be any suitable type of flash memory.

As the operations of random access memory and flash memory are well known they are not described hereafter in any further detail except to clarify the embodiments described herein. Furthermore it would be understood any suitable type of memory suitable for storing code or instructions could be implemented within embodiments as described herein. For example the memory implemented within some embodiments could be magnetic memory, erasable programmable read only memory (EPROM, EEPROM), Read Only Memory (ROM), or erasable optical memory.

Furthermore as shown in Figure 1 the communications bus 14 may be configured to be coupled to a bridge 3 via a bridge coupling 19.

The bridge 3 may be configured to enable the central processing unit 1 to communicate with at least one peripheral 9 via a peripheral or suitable coupling or connection 21. The bridge 3 may for example be any suitable input/output device, such as for example a serial port (UART), a serial communications interface (such as i²c), a serial peripheral interface (SPI), or a controller area network for system interconnects.

The peripheral 9 may in some embodiments be any suitable peripheral such as for example a timer, event counter, or pulse width modulator (PWM).

In the embodiments shown with respect to Figure 1 the program flow enforcer 101 is implemented separate from and located between the central processing unit 1 and the memory, such as the Random Access Memory (RAM) 7. However it would be understood that any suitable architecture or configuration could be employed in other embodiments. For example in some embodiments the control flow enforcer (CFE) or program flow enforcer (PFE) 101 could be implemented in parallel with (or in other words not directly between) the central processing unit 1 and the memory (such as RAM 7). For example in some embodiments the CFE 101 may be coupled only to the communications bus 14 or only to the CPU 1. Furthermore although the embodiments shown in Figure 1 show the CFE 101 as a separate hardware component from the central processing unit (CPU) 1 it would be understood that in some embodiments the CFE 101 may be integrated into the functionality of the CPU 1.

The CFE 101 is configured to determine for a specific code part or program at least one defined reference instruction fetch. In other words the CFE 101 is configured to determine a control flow associated with a specific code part or program to be executed by the CPU 1. Thus in such embodiments the CFE 101 is able to provide an expected next or new instruction fetch indication associated with a current fetched instruction.

The CFE 101 may in some embodiments be configured to inspect, monitor or observe any instruction fetch which is to be executed by the CPU 1. The CFE 101 may be configured to monitor the instruction fetch in any suitable manner. For example in some embodiments the CFE 101 is configured to determine or monitor the next (or a new) instruction fetch address. However it would be understood that in some embodiments the CFE 101 is configured to determine or observe the next (or a new) instruction fetch byte code.

The control flow enforcer (CFE) or program flow enforcer (PFE) 101 may then in some embodiments compare the instruction fetch to the determined expected or reference instruction fetch. In the example provided herein then the CFE 101 next instruction fetch address may be compared against a reference instruction fetch address or addresses, determined as described above from an expected or desired control or program flow analysis. In some embodiments this may be implemented by the control or program flow analysis determining a list of allowed next instruction fetch addresses associated with at least one current instruction address and in some embodiments furthermore associated or based on at least one previously executed instruction address.

Where the comparison shows that there is deviation between the expected/desired and the observed control or program flow, which in the example presented herein may be seen where the instruction fetch address is not one of the determined reference instruction fetch address then the CFE 101 may intervene or generate a suitable intervention.

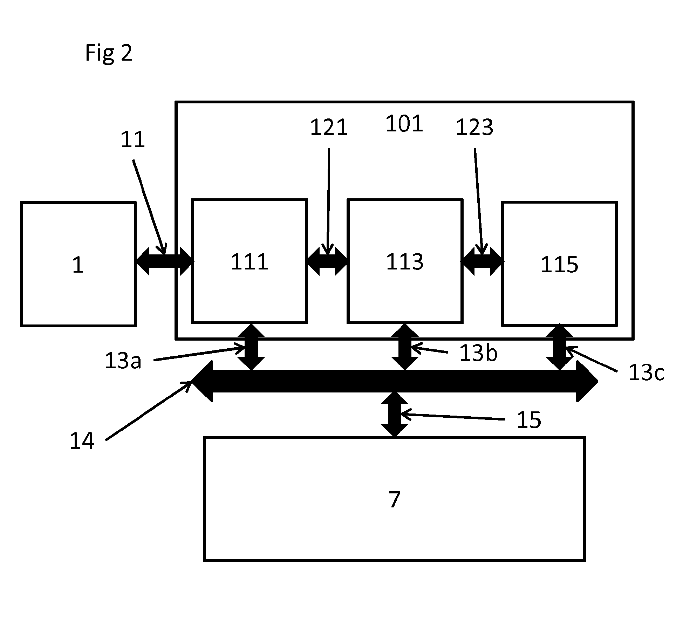

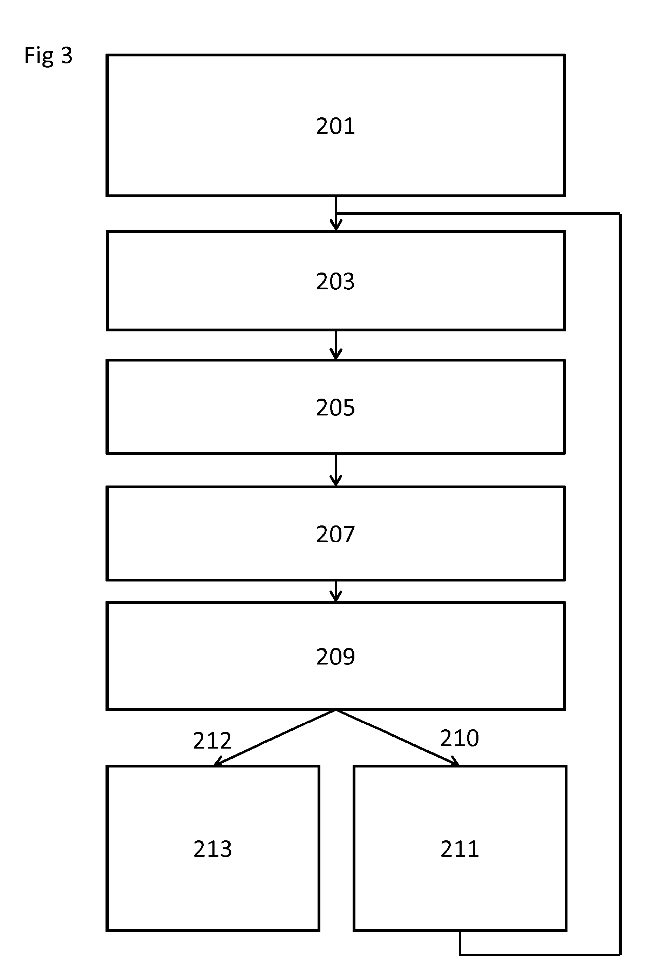

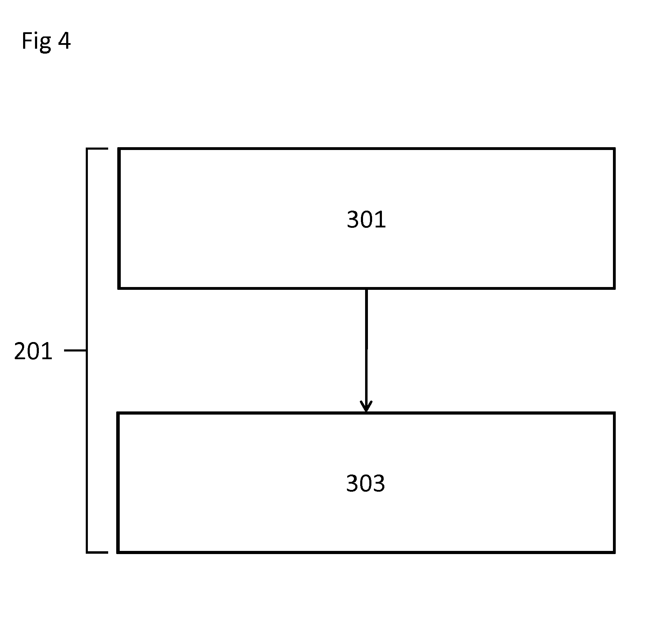

With respect to Figure 2 a detailed conceptual example of the CFE 101 is shown. Furthermore with respect to the flow diagrams of Figures 3 and 4 is described an example operation of the CFE 101 as shown in figure 2.

With respect to Figure 2 the CFE 101 is shown comprising a reference provider (RP) 111, a checking unit (CU) 113, and an intervention unit (IU) 115. In the example shown in Figure 2 the RP 111 is shown coupled to the central processing unit (CPU) 1 via the coupling or connection 11 and the RP 111 is coupled to the communications bus 14 via a first communications coupling or connection 13a. The CU 113 is shown coupled to the RP 111 via a first internal coupling 121 and is further coupled to the IU 115 via a second internal coupling 123. The CU 113 is further shown coupled to the communications bus 14 via a second communications bus coupling or connection 13b. The intervention unit (IU) 115 is shown coupled to the communications bus 14 via a third communications bus coupling 13c.

Although the architecture of the control flow enforcer (CFE) or program flow enforcer (PFE) 101 is shown as a linear or serial configuration between the reference provider (RP) 111, checking unit (CU) 113 and intervention unit (IU) 115 it would be understood that any suitable architecture configuration may be employed. Furthermore although the CFE 101 has in the example discussed herein been conceptually divided into parts comprising the RP 111, CU 113 and IU 115 it would be understood that any suitable hardware configuration suitable for implementing embodiments as described herein could be employed, for example hardware parts featuring a combination of the CU 113 and IU 115, RP 111 and CU 113, or RP 111 and IU 115.

The reference provider (RP) 111 in some embodiments is configured to determine suitable expected or reference control flow (or program flow) based on the current program being executed, or to be executed. In some embodiments the determination of the expected (or reference) control or program flow may be achieved using any suitable known method. These include the RP 111 receiving predetermined expected (reference) control or program flows or the RP 111 generating the control or program flow before the execution of the program. The generation of control or program flows by analysis is known, such as shown from the reference Mary Jean Harrold, Gregg Rothermel, and Alex Orso, "Representation and Analysis of Software", http://www.ics.uci.edu/∼lopes/teaching/inf212W12/readings/rep-analysis-soft.pdf.

The operation of "determining the control flow" for the program is shown in Figure 3 by step 201.

For example in some embodiments the RP 111 may determine the control or program flow of the program to be executed as the control flow is stored in memory at the same time as loading the program onto the microcontroller. In other words the control or program flow is determined by applying control flow analysis prior to the loading of the program onto the microcontroller and the control flow loaded into memory at the same time as the loading of the program.

In some embodiments the reference provider (RP) 111 may therefore be implemented as a memory address generator configured to generate a memory address based on the current instruction (and in some embodiments previous instructions) within which is stored a next instruction fetch item or predicted instruction information (representing the control flow). For example in some embodiments the memory address stores the determined reference control or program flow 'next' instruction fetch memory address(es), or the 'next' instruction fetch byte code.

In some embodiments the RP 111 may be configured to determine the control or program flow of the program to be executed before the program code is executed. For example in some embodiments the RP 111 may be configured to perform control flow analysis on the code to determine the control or program flow during (or after) a code signature verification operation.

In some embodiments the RP 111 may therefore be configured to analyse the control or program code and write to a determined memory address associated with a defined instruction. This write comprises information which identifies the 'next' instruction fetch. This information may, as described herein, in some embodiments comprise expected or predicted instruction fetch memory address(es) or expected or predicted instruction fetch byte code. The RP 111 may in such embodiments then be configured to perform the same memory address generation operation while the program is being executed.

Furthermore in some embodiments the RP 111 may be configured to analyse the control or program code as the program code is being executed. In other words the RP 111 is configured to perform a control flow analysis for an instruction (and in some embodiments at least one previous instruction) as the program code is being executed. In such embodiments the reference provider (RP) 111 may be configured to write the determined control or program flow information, information which identified the 'next' instruction fetch directly to the comparison unit (CU) 113.

Thus in some embodiments the RP 111 may be configured to generate and store a control flow generated on the fly. In other words as the program is run on the processor the next instruction fetch (such as instruction fetch addresses, byte code or instruction) is determined and stored such that on further iterations of the program these previously determined instruction fetches are used as 'dynamically' generated control flow information and compared against the current iteration of the program next instruction fetch.

In some embodiments the RP 111 may be configured to further generate or receive a control flow analysis of the determined control flow. In such embodiments the control flow analysis comprises a statistical information component. For example in some embodiments the instruction fetch address list further comprises an instruction fetch address probability or expectation component which can define or determine an probability or expectation value associated with each element in the list. Furthermore in some embodiments the RP 111 may be configured to generate or receive a probability or expectation value associated with at least one item (such as a range of instruction addresses) not on the list, in other words an expectation of a currently unexpected or unobserved event.

The operation of "generate control flow" (or program flow) for the program is shown in Figure 4 by step 301. As described herein this operation of generating the control flow may be performed pre-loading of the program, post-loading but pre-execution of the program or actually during the execution of the program on a pre-operation/instruction execution basis.

In some embodiments where the control flow is pre-determined, the control flow may be security or digitally signed. For example a pre-determined control flow may be digitally signed according to a known process and the digitally signed result loaded with the pre-determined control flow. The digitally signed result may then be used to check whether the loaded control flow has been tampered with or altered in some manner. For example verification of a digital signature may be performed. Non limiting examples of implementations of digital signatures and their operations may be an elliptic curve digital signature algorithm (ECDSA) or a message authentication code (MAC)..

The expected or determined control flow is in some embodiments determined or encoded in a form which may easily be used to compare with the executed or observed code. For example in some embodiments the control flow is encoded by generating for an instruction fetch address, in other words a memory location within the instruction part of the memory, an associated list of expected or candidate memory addresses from which the next instruction is to be fetched.

It would be understood that in the example presented herein the list of expected memory addresses is associated with the current instruction fetch address. However it would be understood that in some embodiments the list of expected memory addresses may be associated with a current instruction fetch address and also at least one previous instruction fetch address.

For example within a linear or non-branching code sequence the RP 111 may be configured to determine that the associated list of expected instruction addresses comprises: the sum of the current instruction fetch address (provided by the program counter) and an instruction word length; and any non-masked interrupt or exception handler addresses.

The reference provider (RP) 111 may be configured to determine, for branching code sequences, the associated list of expected instruction fetch addresses comprising the destination of the outgoing edge addresses and any non-masked interrupt or exception handler addresses.

The RP 111 furthermore may be configured in some embodiments to determine (encode) the return instruction fetch addresses following a branching operation. Similarly in some embodiments the RP 111 may be configured to encode or determine the entry points or instruction addresses of all of the non-masked interrupt handlers and exception handler addresses.

The operation of "encode control flow", for example determining (for example generating, pointing or loading) a list of associated 'next' instruction addresses for each instruction is generated is shown in Figure 4 by step 303.

In some embodiments the RP 111 may then supply the determined control flow (for example the list of expected 'next' instruction fetches) associated with a current instruction or operation to the checking unit (CU) 113. In some embodiments this may be a direct supply of the information, for example the RP 111 outputs to the CU the list of expected 'next' instruction fetch addresses. However it would be understood that in some embodiments the RP 111 may request or fetch this information to be sent to the CU 113 from memory (for example RAM 7), for example the RP 111 sends a memory request to an address associated with the current instruction address which comprises the list of expected 'next' instruction fetch addresses.

The operation of "supply the determined control flow" to the checking unit (CU) 113 and "for example the expected instruction fetch address(es)" associated with a specific instruction fetch address is shown in Figure 3 by step 203.

The checking unit (CU) 113 may be configured in some embodiments to receive the determined control flow information (in some embodiments the expected 'next' instruction fetch addresses). Furthermore the CU 113 may in some embodiments be configured to receive or observe a 'next' or 'new' instruction fetch from the central processing unit (CPU) 1. In some embodiments the CU 113 is configured to receive or observe the 'next' or 'new' instruction fetch address.

The operation of "observe control flow" and "for example a new instruction fetch address" is shown in Figure 3 by step 205.

The CU 113 may then be configured to compare the observed instruction fetch against the determined control flow information. For example in some embodiments the CU 113 compares the observed instruction fetch address against the determined expected instruction fetch addresses to determine whether the observed instruction fetch address is one of the determined expected instruction fetch addresses.

The operation of "compare observed control flow (instruction fetch address) to expected control flow (the expected instruction fetch address(es))" is shown in Figure 3 by step 207.

The CU 113 may then be configured to determine whether the observed control flow follows or deviates from the determined control flow. For example the CU 113 may in some embodiments determine whether the observed instruction fetch address(es) matches any one of the list of the determined instruction fetch addresses based on the comparison of the instruction fetch address against the list of expected instruction fetch address(es).

In some embodiments the CU 113 may be configured to determine whether the observed control flow follows or deviates from the determined control flow based on whether the observed instruction fetch address(es) matches at least parts of any one of the list of the determined instruction fetch addresses.

In such embodiments the determined instruction fetch addresses may comprise at least one part which is defined a 'wildcard' and thus does not have to be matched with the associated part of the instruction fetch address in order to determine a determined control flow match.

The implementation of 'wildcards' into the expected control flow so to enable partial matching for determining whether the observed control flow follows or deviates from the determined control flow may be applied to the other control flow enforcement methods, such as partial instruction matching or partial byte code matching.

In some embodiments, where there has been a statistical analysis of the determined control flow, the CU 113 may be configured to determine whether the observed control flow follows or deviates from the determined control flow based on whether the expected value associated with an observed instruction fetch such as the next instruction fetch address is below an expected value threshold. In other words the observed control flow is unlikely to be following the expected flow.

The operation of "does observed control flow follow (or deviate) determined expected control flow" and "for example does the instruction fetch address match at least one of the expected instruction fetch address(es)" is shown in Figure 3 by step 209.

Where the observed control flow follows (or in other words does not deviate from) the determined expected control flow then the checking unit (CU) 113 allows the central processing unit (CPU) 1 to perform the instruction fetch and consequently decode and execute the instruction according to a normal operation of the processor. In other words the method follows the right hand path 210 of Figure 3.

The operation of "allow processor to continue" is shown in Figure 3 by step 211.

The method may then in some embodiments pass back to step 203 as the reference provider (RP) provides the control flow for the allowed instruction fetch. For example the determined expected instruction fetch addresses associated with the allowed instruction fetch address are passed to the CU 113 and the steps of observing the control flow, comparison and flow deviation determination are performed based on the allowed instruction fetch.

Where the observed control flow does not follow (or in other words deviates from) the determined expected control flow then the CU 113 may trigger the intervention unit (IU) 115 to perform an intervention. In other words the method follows the left hand path 212 of Figure 3.

The operation of "trigger intervention" is shown in Figure 3 by step 213.

The intervention unit (IU) 115 may be configured in some embodiments to receive a trigger or other suitable information from the CU 113 where the checking unit determines that the observed control flow does not follow (or deviates from) the determined expected control flow.

The intervention unit (IU) 115 may be configured to perform any suitable intervention. For example in some embodiments the IU 115 may be configured to generated or trigger a suitable hardware error, such as triggering an invalid address error.

In some embodiments the IU 115 may be configured to halt or reset the central processing unit (CPU) 1.

In some embodiments the IU 115 may be configured to initiate a code verification operation wherein the program code (for example the instruction block) is flagged and passed to a verifier separate from the microcontroller processing unit to be verified.

In some embodiments the IU 115 may raise an exception and/or interrupt. The exception and/or interrupt may then be handled by an exception/interrupt handler. The exception and/or interrupt handler in such embodiments may be configured to perform a defined operation or sequence such as for example leaving the operating system in a clean or safe state, logging the event for future reference, notifying the user of a potential fault in the program code, or notifying an administrator of the system of a potential fault, infection or intrusion.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In the device claim enumerating several means, several of these means may be embodied by one and the same item of hardware. The mere fact that certain measures are recited in mutually different dependent claims does not indicate that a combination of these measures cannot be used to advantage. Furthermore in the appended claims lists comprising "at least one of: A; B; and C" should be interpreted as (A and/or B) and/or C.

Furthermore in general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

## Claims

1. A method for enforcing control flows on at least one processor, the method comprising:
determining a difference between an observed control flow for a sequence of processes and an expected control flow for the sequence of processes; and
generating an intervention for the at least one processor based on the difference between the observed control flow for the sequence of processes and the expected control flow for the sequence of processes.

2. The method as claimed in claim 1, wherein determining the difference between the observed control flow for the sequence of processes and the expected control flow for the sequence of processes comprises determining a difference between at least one observed instruction fetch and at least one expected instruction fetch.

3. The method as claimed in claim 2, wherein generating the intervention based on the difference between the observed control flow for the sequence of processes and the expected control flow for the sequence of processes comprises generating an intervention based on the difference between the at least one observed instruction fetch and the at least one expected instruction fetch.

4. The method as claimed in any of claims 1 to 3, further comprising determining the expected control flow for the sequence of processes.

5. The method as claimed in claim 4, wherein determining the expected control flow for the sequence of processes comprises determining at least one expected instruction fetch.

6. The method as claimed in any of claims 1 to 5, wherein generating an intervention for the at least one processor based on the difference between the control flow for the sequence of processes and the expected control flow for the sequence of processes comprises at least one of:
generating a hardware error associated with the at least one processor;
generating an invalid address error associated with the at least one processor;
halting the operation of the at least one processor;
resetting the at least one processor;
initiating a code verification operation associated with the at least one processor;
raising an exception associated with the at least one processor; and
raising an interrupt associated with the at least one processor.

7. A non-transitory computer-readable medium containing a computer program comprising computer program code means adapted to control a physical computing device to perform all the steps of claims 1 to 6 if the program is run on the physical computing device.

8. An apparatus for enforcing control flows on at least one processor, the apparatus comprising:
a checking unit configured to determine a difference between an observed control flow for a sequence of processes and an expected control flow for the sequence of processes; and
an intervention unit configured to generate an intervention for the at least one processor based on the checking unit determining a difference between the observed control flow for the sequence of processes and the expected control flow for the sequence of processes.

9. The apparatus as claimed in claim 8, wherein the checking unit is configured to determine a difference between at least one observed instruction fetch and at least one expected instruction fetch.

10. The apparatus as claimed in claim 9, wherein the intervention unit is configured to generate an intervention based on the checking unit determining a difference between the at least one observed instruction fetch and the at least one expected instruction fetch.

11. The apparatus as claimed in claims 8 to 10, further comprising a reference provider configured to determine the expected control flow for the sequence of processes.

12. The apparatus as claimed in claim 11, wherein the reference provider is configured to determine at least one expected instruction fetch.

13. The apparatus as claimed in any of claims 8 to 12, wherein the intervention unit configured to generate an intervention for the at least one processor based on the difference between the control flow for the sequence of processes and the expected control flow for the sequence of processes is configured to perform at least one of:
generate a hardware error associated with the at least one processor;
generate an invalid address error associated with the at least one processor;
halt the operation of the at least one processor;
reset the at least one processor;
initiate a code verification operation associated with the at least one processor;
raise an exception associated with the at least one processor; and
raise an interrupt associated with the at least one processor.

14. The method as claimed in any of claims 2 and 3 or the apparatus as claimed in any of claims 9 and 10, wherein the at least one observed instruction fetch comprises at least one of:
at least one instruction fetch memory address;
at least one instruction fetch instruction word; and
at least one instruction fetch byte code.

15. The method as claimed in any of claims 2, 3, 5 and 6, or the apparatus as claimed in any of claims 9, 10 and 13, wherein the at least one expected instruction fetch comprises at least one of:
at least one instruction fetch memory address associated with at least one preceding instruction fetch memory address;
at least one instruction fetch instruction word associated with at least one preceding instruction fetch instruction word; and
at least one instruction fetch byte code associated with at least one preceding instruction fetch byte code.
